# EUROPEAN PATENT SPECIFICATION

(11) **EP 1 787 504 B1**
(45) Date of publication and mention of the grant of the patent: **25.02.2009**
(21) Application number: 06124216.0
(22) Date of filing: 16.11.2006
(51) Int. Cl.: A01D 43/08, A01F 29/14, A01F 29/18

(54) **Crop processor bearing protection**
Schutzvorrichtung für ein Lager einer Erntegutbearbeitungsvorrichtung
Protection pour palier d'un dispositif de traitement de la récolte

(30) Priority: 22.11.2005 GB 0523672
(43) Date of publication of application: 23.05.2007
(73) Proprietor: CNH Belgium N.V., 8210 Zedelgem (BE)
(72) Inventor: Van Vooren, Sandor W., 8340, Sijsele-Damme (BE)
(74) Representative: CNH IP Department

(56) References cited:
- EP-A- 0 492 273
- WO-A-01/37633
- WO-A-01/47342
- FR-A1- 2 692 430

## Description

### Field of the invention

This invention relates to forage harvesters.

### Background of the invention

Forage harvesters are machines which chop crop gathered from a field into small pieces to produce animal feed. In the case of crops such as grass or alfalfa, these will have been pre-cut and left to dry in the sun, so that the crop need only be gathered by the harvester. With other crops, such as maize, the forage harvester may also be required to cut the crop. Thus, the harvesters may be fitted with different headers to suit the crop being harvested.

The crop, whether cut maize or gathered grass, is fed into a rotating knife drum or cutter which comminutes the product. With grass crops, this alone is sufficient to produce the desired forage. However, when harvesting maize for silage purposes, the cutting alone does not suffice due to the presence of kernels in the crop. The kernels need to be cracked in order to release the nutrient, as uncracked kernels are hard for animals to digest. As cutting alone is insufficient to crack all the kernels, the crop is additionally passed through a crop processor which comprises two closely adjacent rollers, typically having serrated surfaces, which rotate such that there is slippage between the adjacent surfaces. The gap between the rollers is set to suit the size of grain passing through and the speed, rotational energy of the rollers, relative movement and serration of the surfaces together ensure cracking of any kernels that are still intact after chopping by the cutter.

The momentum of the maize from the crop processor or the grass from the cutter, as the case may be, carries the crop into an accelerator or blower which then propels it up a tower to a discharge spout through which it is discharged into a wagon or a trailer drawn by a separate vehicle driven alongside the harvester.

When chopping kernel-free crops, such as grass or alfalfa, the crop processor is not required and leaving it in place in the crop flow path results in its rollers being unnecessarily subjected to wear.

To avoid such wear, it has previously been proposed to remove the crop processor from the vehicle, but the size and weight of the crop processor make this a difficult and cumbersome task.

Another solution, disclosed in EP 1 229 778 and GB 2 414 373, is to pivot the crop processor away from its operative position in the crop path but to leave it on the vehicle in an inoperative position.

In such a forage harvester, when the crop processor is moved to the inoperative position, it may remain accessible to personnel. Because of the high speed of rotation of the rolls of the crop processor, this present a safety hazard. For this reason, safety regulations advise that the belt driving the rolls of the crop processor be removed.

If the forage harvester is operated with the crop processor rendered inoperative in this manner, vibration can cause damage to the bearings of the crop processor as the rolling elements of the bearings tend to make indentations in the surface of the raceways.

With a view to mitigating the foregoing disadvantage, means are provided in a forage harvester according to claim 1 with a movable crop processor for rotating the rolls of the crop processor when it is in the inoperative position much more slowly than it would in the operative position.

Preferably the means for rotating the rolls of the crop processor in the inoperative position comprise an electric motor. Alternatively power for rotating the crop processor may be derived from the engine of the forage harvester through a suitable gearbox or from the blower, using a slipping clutch.

As previously mentioned, to avoid the danger presented by a fast moving belt, safety requirements call for the drive belt of the crop processor to be removed when the crop processor when it is in the inoperative position. Having removed the belt from around the pulley driven by the blower of the forage harvester, it is possible to use the same belt to couple drive to the crop processor from the electric motor or auxiliary gear box.

### Brief description of the drawings

The invention will now be described further by way of example with reference to the accompanying drawings in which:
Figures 1 and 2 correspond to Figures 6 and 7 of GB 2 414 373 which illustrate the problem underlying the invention, and
Figure 3 is a partial view of an embodiment of the invention showing the drive of the crop processor when it is in the inoperative position.

### Detailed description of the preferred embodiment

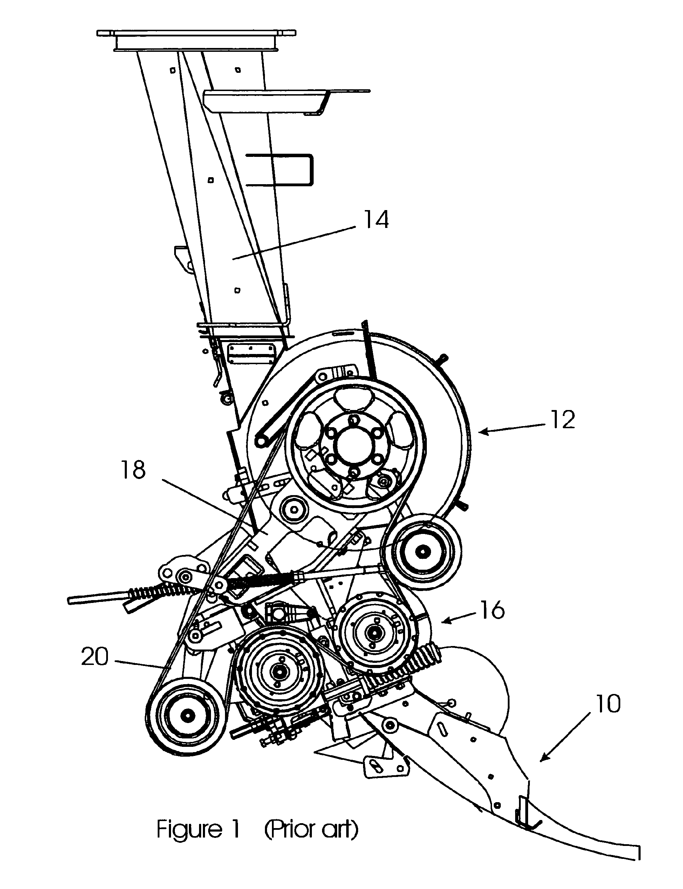

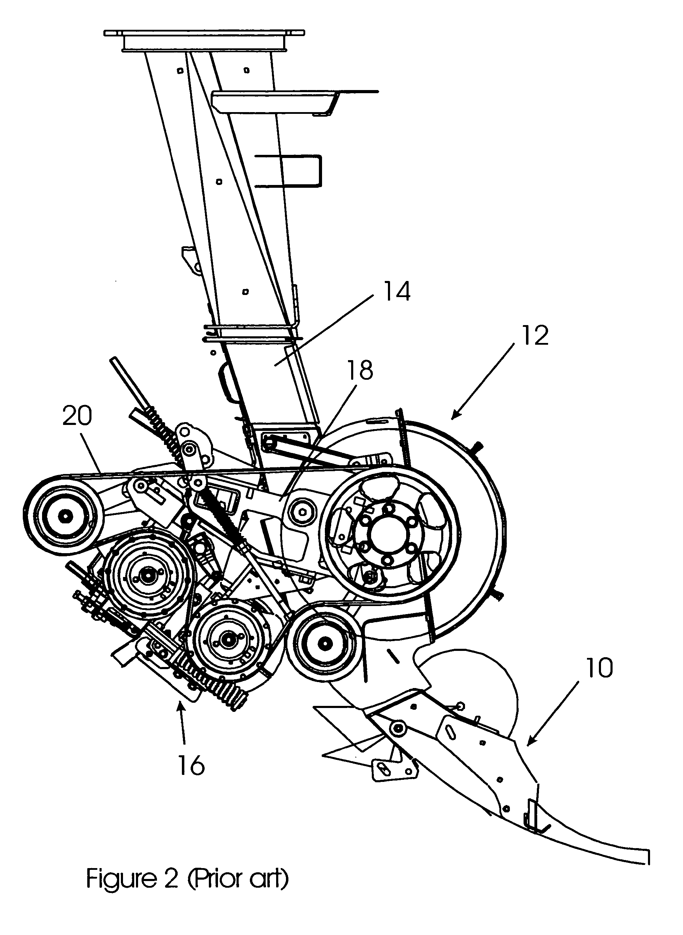

Figures 1 and 2 are described in GB 2 414 373 in detail and its disclosure is imported herein by reference to avoid lengthy repetition. These figures are described below only to the extent necessary to allow an understanding of the present invention.

Crop cut from a field by a suitable cutter advances along a chute 10 to an accelerator 12 also termed a blower. The accelerator propels the cut crop up a discharge spout 14 from which it is delivered to a vehicle driven alongside the forage harvester. The crop may or may not be of a type that contains hard kernels that need to be crushed to render them digestible.

A crop processor 16 having a pair of closely spaced and usually serrated rollers is used to crush the kernels if they are present. When harvesting crops such as maize, which contain hard kernels, the crop processor is moved into the operative position shown in Figure 1 in which it lies in the path of the crop between the entry chute 10 and the discharge spout 14. When harvesting crops such as grass and alfalfa that do not contain hard kernels, the crop processor is moved to an inoperative position outside the crop flow path, as shown in Figure 2. In the arrangement shown in Figures 1 and 2, the crop processor 16 and the accelerator 12 are mounted on a common pivot frame 18 so that the accelerator is lowered towards the entry chute 10 when the crop processor 16 is moved to the inoperative position, this being done to reduce the risk blockages. It is not however essential in the present invention for the accelerator 12 nor indeed any other component to be movable, other than the crop processor 16 itself.

The crop processor 16 is driven from the accelerator 12 by means of a belt 20. A separate belt is provided on the opposite side of the accelerator to drive the accelerator 12 from the main engine of the forage harvester which also powers the cutters.

As can be seen from the Figure 2, it is possible to leave the belt 20 driving the rolls of the crop processor in place when it is in the inoperative position. However, this would result in the rolls of the crop processor rotating at high speed even though they are not in use and this can present a safety hazard. It is therefore advisable to remove the belt 20 when the crop processor 16 is not in use.

If the belt 20 is removed and the rolls of the crop processor are allowed to remain stationary when in the inoperative position of Figure 2, the constant vibration of the crop processor caused damage to its bearings. Persistent hammering of the rolling elements of the bearing against the same spot on their raceways creates dents in the raceways which shortens the life of the bearings.

To mitigate this problem, the present invention proposed driving the crop processor slowly when it is in the inoperative position so that the bearing are not damaged. The rolls of the processor are rotated slowly, just for the purpose of keeping the point of contact between the rolling elements and the raceways constantly moving, thereby avoiding local denting of the bearing raceways.

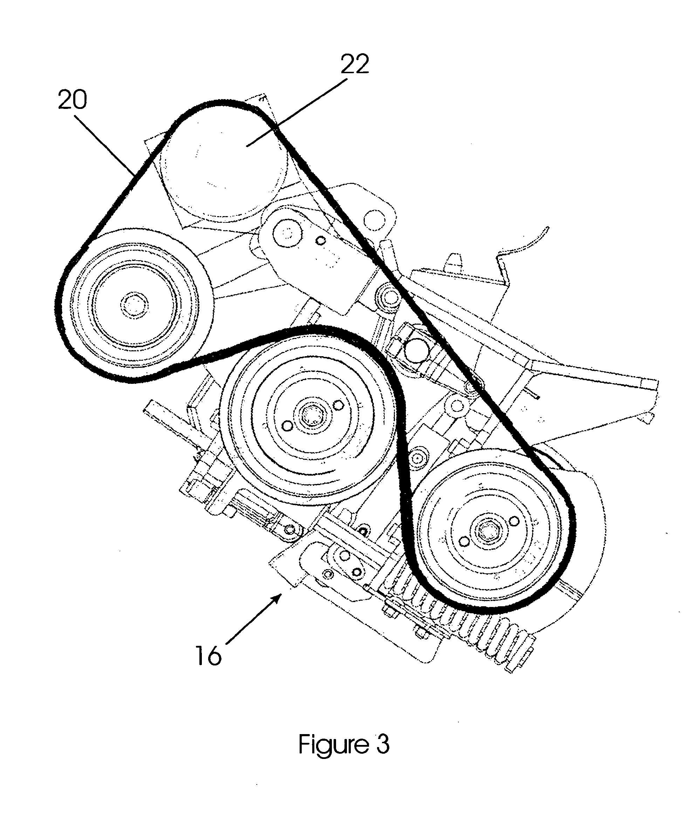

The means for slowly driving the crop processor in its inoperative position is shown in Figure 3 as being an electric motor 22. Furthermore, the same belt 20 is repositioned from the accelerator 12 onto the electric motor so that the same pulleys and belt tensioning system are used to drive the crop processor rolls when in the inoperative position.

It is not essential to use a separate electric motor as drive can be taken from the main engine of the forage harvester or the crop accelerator through a reduction gearbox or a slipping clutch to allow the crop processor to turn much more slowly than it would in the operative position.

## Claims

1. A forage harvester having a crop processor (16) that is movable between an operative position in which the rolls of the crop processor (16) lie in the path of the crop flowing through the harvester and an inoperative position, wherein means (20,22) are provided for rotating the rolls of the crop processor (16), when the crop processor (16) is in the inoperative position,
**characterised in that** the rotating means (20,22) are operable to rotate the rolls, when the crop processor (16) is in the inoperative position, at a substantially lower speed than they do in the operative position, sufficient to avoid vibration induced damage to the rotating components of the crop processor (16).

2. A forage harvester as claimed in claim 1, wherein the means for rotating the rolls of the crop processor (16) in the inoperative position comprise an electric motor (22).

3. A forage harvester as claimed in claim 1, wherein the means for rotating the rolls of the crop processor (16) in the inoperative position comprise a gearbox having an input shaft rotatable by the crop accelerator (12) of the harvester.

4. A forage harvester as claimed in claim 3, wherein a slipping clutch is provided between the gearbox and the crop accelerator (12).

5. A forage harvester as claimed in any preceding claim, wherein the means for rotating the rolls of the crop processor (16) in the inoperative position further comprise a repositionable belt (20).

6. A forage harvester as claimed in claim 5, wherein the belt used to drive the crop processor when in the operative position is repositionable to drive the rolls of the crop processor in the inoperative position.

## Patentansprüche

1. Feldhäcksler mit einer Erntegut-Bearbeitungsvorrichtung (16), die zwischen einer Betriebsstellung, in der die Walzen der Erntegut-Bearbeitungsvorrichtung (16) in dem Pfad des Ernteguts liegen, das durch den Feldhäcksler strömt, und einer Ruhestellung beweglich ist, wobei Einrichtungen (20, 22) zum Drehen der Walzen der Erntegut-Bearbeitungsvorrichtung (16) vorgesehen sind, wenn sich die Erntegut-Bearbeitungsvorrichtung (16) in der Ruhestellung befindet,
**dadurch gekennzeichnet, dass** die Drehantriebseinrichtungen (20, 22) betreibbar sind, um die Walzen bei sich in der Ruhestellung befindlicher Erntegut-Bearbeitungsvorrichtung (16) mit einer wesentlich niedrigeren Drehzahl anzutreiben, als sie dies in der Betriebsstellung tun, die ausreichend ist, um durch Schwingungen hervorgerufene Schäden an den rotierenden Bauteilen der Erntegut-Bearbeitungsvorrichtung (16) zu vermeiden.

2. Feldhäcksler nach Anspruch 1, bei dem die Einrichtungen zum Drehantrieb der Walzen der Erntegut-Bearbeitungsvorrichtung (16) in der Ruhestellung einen Elektromotor (22) umfassen.

3. Feldhäcksler nach Anspruch 1, bei dem die Einrichtungen zum Drehantrieb der Walzen der Erntegut-Bearbeitungsvorrichtung (16) in der Ruhestellung ein Getriebe mit einer Eingangswelle umfassen, die durch die Erntegut-Beschleunigungseinrichtung (12) des Feldhäckslers in Drehung versetzbar ist.

4. Feldhäcksler nach Anspruch 3, bei dem eine Rutschkupplung zwischen dem Getriebe und der Erntegut-Beschleunigungseinrichtung (12) vorgesehen ist.

5. Feldhäcksler nach einem der vorhergehenden Ansprüche, bei dem die Einrichtungen zum Drehantrieb der Walzen der Erntegut-Bearbeitungsvorrichtung (16) in der Ruhestellung weiterhin einen umstellbaren Antriebsriemen (20) umfassen.

6. Feldhäcksler nach Aspruch 5, bei dem der zum Antrieb der Erntegut-Bearbeitungsvorrichtung in deren Betriebsstellung verwendete Riemen umstellbar ist, um die Walzen der Erntegut-Bearbeitungsvorrichtung in der Ruhestellung anzutreiben.

## Revendications

1. Récolteuse-hacheuse dotée d'un dispositif de transformation du produit de récolte (16) qui peut être déplacé entre une position de fonctionnement dans laquelle les rouleaux du dispositif de transformation du produit de récolte (16) se situent dans la trajectoire du produit de récolte qui traverse la récolteuse, et une position de non-fonctionnement, dans laquelle des moyens (20, 22) sont fournis pour faire tourner les rouleaux du dispositif de transformation du produit de récolte (16), lorsque le dispositif de transformation du produit de récolte (16) est dans la position de non-fonctionnement,
**caractérisée en ce que** les moyens de rotation (20, 22) peuvent être utilisés pour faire tourner les rouleaux, lorsque le dispositif de transformation du produit de récolte (16) est dans la position de non-fonctionnement, à une vitesse considérablement inférieure à leur vitesse de rotation dans la position de fonctionnement, suffisante pour éviter les dommages dus aux vibrations subis par les composants rotatifs du dispositif de transformation du produit de récolte (16).

2. Récolteuse-hacheuse suivant la revendication 1, dans laquelle les moyens de rotation des rouleaux du dispositif de transformation du produit de récolte (16) dans la position de non-fonctionnement comprennent un moteur électrique (22).

3. Récolteuse-hacheuse suivant la revendication 1, dans laquelle les moyens de rotation des rouleaux du dispositif de transformation du produit de récolte (16) dans la position de non-fonctionnement comprennent une boîte de vitesses dotée d'un arbre primaire actionnable par l'accélérateur du produit de récolte (12) de la récolteuse.

4. Récolteuse-hacheuse suivant la revendication 3, dans laquelle un embrayage à friction est prévu entre la boîte de vitesses et l'accélérateur du produit de récolte (12).

5. Récolteuse-hacheuse suivant l'une quelconque des revendications qui précèdent, dans laquelle les dispositifs de rotation des rouleaux du dispositif de transformation du produit de récolte (16) dans la position de non-fonctionnement comprennent également une courroie repositionnable (20).

6. Récolteuse-hacheuse suivant la revendication 5, dans laquelle la courroie utilisée pour entraîner le dispositif de transformation du produit de récolte, dans la position de fonctionnement, est repositionnable pour entraîner les rouleaux du dispositif de transformation du produit de récolte dans la position de non-fonctionnement.
